# EUROPÄISCHE PATENTSCHRIFT

(11) **EP 3 743 234 B1**
(45) Veröffentlichungstag und Bekanntmachung des Hinweises auf die Patenterteilung: **26.07.2023**
(21) Anmeldenummer: 19701319.6
(22) Anmeldetag: 16.01.2019
(51) Int. Cl.: B23C 5/16, B23C 5/10

(54) **FRÄSWERKZEUG**
MILLING TOOL
OUTIL DE FRAISAGE

(30) Priorität: 25.01.2018 DE 102018201195
(43) Veröffentlichungstag der Anmeldung: 02.12.2020
(73) Patentinhaber: MAPAL Fabrik für Präzisionswerkzeuge Dr. Kress KG, 73431 Aalen (DE)
(72) Erfinder: FRONIUS, Jürgen, 74399 Walheim (DE)
(74) Vertreter: Kordel, Mattias
(86) Internationale Anmeldenummer: PCT/EP2019/051081
(87) Internationale Veröffentlichungsnummer: WO 2019/145208

(56) Entgegenhaltungen:
- WO-A1-2011/157667
- DE-U1-202010 015 446
- JP-U- H02 114 413
- US-A- 4 810 136
- US-A- 5 366 468

## Beschreibung

Die Erfindung betrifft ein Fräswerkzeug gemäß dem Oberbegriff des Anspruchs 1. Ein solches Fräswerkzeug ist aus US 5 366 468 A bekannt.

Ein Fräswerkzeug der hier angesprochenen Art weist einen eine Mittelachse aufweisenden Bearbeitungsabschnitt auf, wobei der Bearbeitungsabschnitt wenigstens einen sich ausgehend von einem Zentrum des Bearbeitungsabschnitts radial nach außen erstreckenden Steg aufweist, an dem eine Umgangsschneide und eine der Umfangsschneide zugeordnete Spanfläche angeordnet sind, die sich in Richtung der Mittelachse erstrecken. Dabei weisen die Umfangsschneide und die ihr zugeordnete Spanfläche - in Richtung der Mittelachse gesehen - eine endliche Krümmung auf, sodass die Spanfläche konkav ausgebildet ist. Diese Ausgestaltung hat insbesondere Vorteile bei der Bearbeitung von Werkstoffen, welche Fasern aufweisen, insbesondere bei der Bearbeitung von Faserverbundwerkstoffen wie beispielsweise faserverstärkten Kunststoffen oder Sandwichwerkstoffen mit Schichten aus faserverstärktem Kunststoff einerseits und metallischen Werkstoffen andererseits, insbesondere Titan oder Aluminium. Die gekrümmte Ausbildung der Umfangsschneide und die konkave Ausgestaltung der Spanfläche verhindern insbesondere eine Delamination solcher Werkstoffe an Werkstückkanten, da die Fasern im Bereich einer Werkstückkante durch die Form der Umfangsschneide und der Spanfläche nach innen in Richtung eines Werkstückinneren gedrängt werden. Somit wird auch eine Gratbildung vermieden.

Problematisch dabei ist allerdings, dass durch die Umfangsschneide von dem Werkstück abgetragene Späne - entlang der Mittelachse gesehen - aus zwei entgegengesetzten Richtungen zu einem Tiefpunkt oder Minimum der Spanfläche hin gedrängt werden, wo sie sich sammeln. Die Späne können nur schwer aus diesem Bereich der Spanfläche wieder abgeführt werden, und das Fräswerkzeug neigt hier zu einer erhöhten Spänekompression. Insbesondere bei hoher Zerspanleistung kommt es in diesem Bereich zu erhöhter Wärmeentwicklung und Strukturaufweichen des Werkstücks.

Der Erfindung liegt die Aufgabe zugrunde, ein Fräswerkzeug zu schaffen, welches die genannten Probleme vermeidet.

Die Aufgabe wird gelöst, indem ein Fräswerkzeug mit den Merkmalen des Anspruchs 1 geschaffen wird. Vorteilhafte Ausgestaltungen ergeben sich aus den Unteransprüchen.

Die Aufgabe wird insbesondere gelöst, indem ein Werkzeug der zuvor angesprochenen Art dadurch weitergebildet wird, dass der wenigstens eine Steg einen Durchbruch aufweist, der den Steg durchsetzt und in einen von der Spanfläche begrenzten Spanraum mündet. Der Durchbruch weist insbesondere eine in der Spanfläche angeordnete Mündungsöffnung, insbesondere Mündung, auf. Über die Mündung des Durchbruchs in der Spanfläche können auf der Spanfläche angeordnete Späne während der Bearbeitung eines Werkstücks in den Durchbruch und damit in den Steg eintreten, sodass eine Spänesammlung und insbesondere eine Spänekompression auf der Spanfläche vermieden wird. Somit kann insbesondere auch eine erhöhte Wärmeentwicklung und Strukturaufweichung des Werkstücks bei erhöhter Zerspanleistung vermieden werden.

Unter einer Mittelachse wird hier insbesondere eine Längsachse des Fräswerkzeugs verstanden. Insbesondere ist die Mittelachse eine Drehachse des Fräswerkzeugs, um welche das Fräswerkzeug zum Zweck der Bearbeitung eines Werkstücks drehbar ist. Zur Bearbeitung eines Werkstücks wird eine Relativdrehung zwischen dem Fräswerkzeug und dem Werkstück erzeugt, wobei es grundsätzlich nicht darauf ankommt, ob das Werkstück relativ zu dem feststehenden Fräswerkzeug gedreht wird, ob das Fräswerkzeug relativ zu dem feststehenden Werkstück gedreht wird, oder ob das Werkstück und das Fräswerkzeug beide in relativ zueinander drehende Bewegungen versetzt werden. Typischerweise wird das Fräswerkzeug in Rotation relativ zu dem zumindest rotatorisch unbewegten Werkstück gebracht. Die Rotation des Fräswerkzeugs erfolgt dabei um die Mittelachse.

Eine radiale Richtung ist eine Richtung, die senkrecht auf der Mittelachse steht. Eine Umfangsrichtung umgreift die Mittelachse konzentrisch.

Unter einem Zentrum des Bearbeitungsabschnitts wird ein Bereich desselben verstanden, welcher - in radialer Richtung gesehen - nahe an der Mittelachse angeordnet ist, vorzugsweise die Mittelachse unmittelbar umgibt. Es ist möglich, dass sich der wenigstens eine Steg unmittelbar ausgehend von der Mittelachse radial nach außen erstreckt, es ist aber auch möglich, dass das Fräswerkzeug im Bereich des Zentrums des Bearbeitungsabschnitts einen Kern aufweist, ausgehend von dem sich der Bearbeitungsabschnitt radial nach außen erstreckt.

Die Umfangsschneide ist an dem Steg umfangsseitig angeordnet. Sie liegt vorzugsweise in einer die Mittelachse umgreifenden, gedachten Umfangsfläche, wobei die gedachte Umfangsfläche vorzugsweise kreiszylindrisch ist.

Die Umfangsschneide ist insbesondere als geometrisch definierte Schneide ausgebildet und ist insoweit insbesondere eine scharfgeschliffene Umfangsschneidkante.

Gemäß einer Weiterbildung der Erfindung ist vorgesehen, dass der Durchbruch im Bereich eines Minimums der gekrümmten Spanfläche in den Spanraum mündet. Somit ist die Mündung des Durchbruchs gerade dort auf der Spanfläche angeordnet, wo sich die Späne bei der Bearbeitung eines Werkstücks sammeln und sich daher - ohne den Durchbruch - ein Druckpunkt ergibt. Durch diese Anordnung des Durchbruchs in dem Bereich des Minimums kann das Fräswerkzeug somit besonders effizient entlastet und eine Spänekompression sicher vermieden werden.

Bei dem Minimum handelt es sich bevorzugt um ein lokales Minimum oder um ein globales Minimum der Spanfläche. Das Minimum ergibt sich insbesondere entlang der Mittelachse gesehen. Alternativ oder zusätzlich ist das Minimum ein sich in radialer Richtung gesehen ergebendes Minimum. Besonders bevorzugt handelt es sich bei dem Minimum um einen Tiefpunkt, an welchem die Spanfläche sowohl entlang der Mittelachse als auch in radialer Richtung gesehen minimal ist.

Gemäß einer Weiterbildung der Erfindung ist vorgesehen, dass der Durchbruch den Steg schräg zur Mittelachse durchsetzt. Dadurch kann die Spanabfuhr von der Spanfläche in den Durchbruch und bevorzugt entlang des Durchbruchs optimiert werden. Bevorzugt durchsetzt der Durchbruch den Steg mit einem spitzen Winkel zur Mittelachse. Dies fördert die Spanentsorgung in besonderer Weise.

Besonders bevorzugt ist vorgesehen, dass der Durchbruch den Steg mit einem spitzen Winkel zur Mittelachse derart durchsetzt, dass die Mündung des Durchbruchs auf der Spanfläche näher an einer Stirnseite des Bearbeitungsabschnitts angeordnet ist als ein der Mündung abgewandtes Ende des Durchbruchs. Unter einer Stirnseite des Bearbeitungsabschnitts wird dabei eine Front des Bearbeitungsabschnitts verstanden, welche dem zu bearbeitenden Werkstück bestimmungsgemäß zu- und einem Befestigungs- oder Einspannabschnitt des Fräswerkzeugs abgewandt ist. Insbesondere ist bevorzugt an der Stirnseite wenigstens eine Stirnschneide angeordnet, die eingerichtet ist zur spanenden Bearbeitung eines Werkstücks. Der Durchbruch erstreckt sich also ausgehend von der Mündung entlang seines Verlaufs von der Stirnseite weg - nach hinten - in Richtung eines Einspann- oder Befestigungsabschnitts des Fräswerkzeugs. Auf diese Weise können die in den Durchbruch gelangenden Späne effizient von dem Ort ihrer Entstehung und Sammlung nach hinten in Richtung des Einspann- oder Befestigungsabschnitts des Fräswerkzeugs abgeführt werden.

Dabei ist der Durchbruch bevorzugt so angeordnet, dass der Verlauf eines stirnseitigen Spanflächenabschnitts der Spanfläche - entlang der Mittelachse - in ein Inneres des Stegs fortgesetzt ist. Ein stirnseitiger Spanflächenabschnitt ist dabei ein Abschnitt der Spanfläche, der von dem Durchbruch aus gesehen in Richtung der Stirnseite angeordnet ist. Der Verlauf dieses Spanflächenabschnitts setzt sich - bevorzugt tangential - in das Innere des Durchbruchs fort, sodass in einer Zusammenschau des stirnseitigen Spanflächenabschnitts und des Durchbruchs quasi ein spiralisierter Spanraum gebildet ist, analog zu einem spiralisierten Fräswerkzeug mit entlang einer Schraubenlinie verlaufenden Schneiden und Spanflächen - trotz der Krümmung der Spanfläche. Die Abfuhr der Späne in den Durchbruch und entlang des Durchbruchs wird auf diese Weise deutlich verbessert.

Alternativ ist es aber auch möglich, dass der Durchbruch den Steg senkrecht zur Mittelachse durchsetzt. Auch auf diese Weise kann eine Entlastung der Spanfläche von Spänekompression, insbesondere im Druckpunkt, bewirkt werden.

Gemäß einer Weiterbildung der Erfindung ist vorgesehen, dass der Durchbruch zumindest im Inneren des Stegs kreiszylindrisch ausgebildet ist. Der Durchbruch weist somit insbesondere im Inneren des Stegs eine kreiszylindrische Umfangswandung auf. Auf diese Weise ist der Durchbruch besonders einfach und kostengünstig herstellbar.

Vorzugsweise ist der Durchbruch durch Erodieren oder durch Bohren hergestellt.

Durchsetzt der Durchbruch den Steg schräg zur Mittelachse, insbesondere mit einem spitzen Winkel, und ist er zugleich zumindest im Inneren des Stegs, vorzugsweise insgesamt, kreiszylindrisch ausgebildet, ergibt sich im Bereich des Austritts des Durchbruchs in der gekrümmten Spanfläche eine von der Kreisform abweichende und insbesondere in ihrem Flächeninhalt relativ zu einem gedachten senkrechten Austreten desselben Durchbruchs vergrößerte Mündung. Auf diese Weise können Späne von der Spanfläche besonders effizient über die in ihrem Flächeninhalt vergrößerte Mündung in den Durchbruch hinein und durch den Durchbruch abgeführt werden.

Gemäß einer Weiterbildung der Erfindung ist vorgesehen, dass der Durchbruch mit einem der Mündung in den Spanraum abgewandten Ende in einen Rückraum des Stegs einmündet, wobei der Rückraum - in Umfangsrichtung und in einer bestimmungsgemäßen Rotationsrichtung des Fräswerkzeugs gesehen - dem Steg nacheilt. Der Durchbruch weist also insbesondere ein erstes Ende auf, welches durch die erste Mündung auf der Spanfläche gebildet ist. Der Durchbruch weist ein - entlang seiner Erstreckung gesehen dem ersten Ende gegenüberliegendes - zweites Ende auf, welches durch eine zweite Mündung in den Rückraum gebildet ist. Die durch die erste Mündung des ersten Endes in den Durchbruch eingebrachten Späne werden entlang des Durchbruchs gefördert und gelangen durch die zweite Mündung im Bereich des zweiten Endes in den Rückraum, von wo aus sie abgeführt werden. Auf diese Weise können die Späne effizient und dauerhaft von der Spanfläche entfernt werden. Der Rückraum ist insbesondere - in bestimmungsgemäßer Rotationsrichtung des Fräswerkzeugs gesehen - hinter dem Steg angeordnet.

Alternativ zu dieser Ausgestaltung ist es auch möglich, dass der Durchbruch sich im Inneren des Fräswerkzeugs bis in den Bereich eines Schafts, bis zu einem Schaftende oder bis zu einem Ende des Bearbeitungsabschnitts fortsetzt, sodass die Spanabfuhr zumindest im Wesentlichen innerhalb des Fräswerkzeugs erfolgt.

Gemäß einer Weiterbildung der Erfindung ist vorgesehen, dass das Fräswerkzeug wenigstens einen weiteren Steg mit einer Umfangsschneide und einer dieser zugeordneten Spanfläche aufweist, wobei der Rückraum des zuvor beschriebenen ersten Stegs ein Spanraum des weiteren, zweiten Stegs ist. Die Späne, die in dem Spanraum des ersten Stegs gesammelt werden, werden also bevorzugt durch den Durchbruch in den Spanraum des zweiten Stegs gefördert.

In diesem Zusammenhang erweist es sich als besonders vorteilhaft, wenn der Durchbruch den Steg schräg zur Mittelachse durchsetzt, wobei in diesem Fall das zweite Ende des Durchbruchs - in Richtung der Mittelachse gesehen - weiter von der Stirnseite des Bearbeitungsabschnitts entfernt ist als das erste Ende des Durchbruchs. Somit werden die Späne innerhalb des Durchbruchs nach hinten gefördert und gelangen in einen der Stirnseite abgewandten, hinteren Abschnitt des Spanraums des zweiten Stegs, wo sie nicht mit den im Bereich der gekrümmten Spanfläche des zweiten Stegs gesammelten Spänen kollidieren. Vielmehr können die Späne von dem hinteren Spanflächenabschnitt des zweiten Stegs abgeführt werden.

Die Stege sind vorzugsweise identisch ausgebildet, sodass insbesondere auch der zweite Steg einen in seinen Spanraum mündenden, den Steg durchsetzenden Durchbruch aufweist. Weiterhin weist der zweite Steg ebenfalls eine gekrümmte Umfangsschneide sowie eine gekrümmte Spanfläche auf, die der Umfangsschneide zugeordnet ist.

Die Mündungen der Durchbrüche in die Spanräume der verschiedenen Stege können - in Richtung der Mittelachse gesehen - auf einer gleichen Höhe oder auf verschiedenen Höhen angeordnet sein. Bevorzugt sind sie aber stets so angeordnet, dass ein jeweils in Richtung auf eine weitere Spanfläche mündendes zweites Ende eines Durchbruchs eines Stegs unterhalb - das heißt auf einer der Stirnseite abgewandten Seite - der Mündung des weiteren Durchbruchs auf der weiteren Spanfläche angeordnet ist. Somit gelangen aus dem Durchbruch austretende Späne nicht unmittelbar in den Bereich eines weiteren Durchbruchs.

Vorzugsweise weist das Fräswerkzeug eine Mehrzahl von - besonders bevorzugt identisch zueinander ausgebildeten - Stegen auf. Insbesondere ist es möglich, dass das Fräswerkzeug vier Stege aufweist. Auch ein Ausführungsbeispiel mit fünf Stegen ist möglich. Weiterhin ist eine größere oder kleinere Anzahl von Stegen möglich. Die Anzahl von Stegen kann insbesondere von einem Durchmesser des Fräswerkzeugs, der Krümmung der Umfangsschneiden, und/oder einer für eine konkrete Zerspanungsaufgabe nötige Spanraumtiefe abhängen.

Dass die Stege zueinander identisch ausgebildet sind, bedeutet insbesondere, dass jeder der Stege jeweils eine umfangsseitige Umfangsschneide sowie eine der Umfangsschneide zugeordnete Spanfläche aufweist, wobei die Umfangsfläche und die ihr zugeordnete Spanfläche - in Richtung der Mittelachse gesehen - eine endliche Krümmung aufweisen, sodass die Spanflächen konkav ausgebildet sind. Außerdem weist jeder Steg einen in seinen Spanraum mündenden, den Steg durchsetzenden Durchbruch auf. Es ist aber möglich, dass die Mündungen der Durchbrüche auf den Spanflächen der verschiedenen Stege - in Richtung der Mittelachse gesehen - in verschiedenen Höhen angeordnet sind. Alternativ ist es möglich, dass die Mündungen der Durchbrüche auf einer selben Höhe angeordnet sind.

Gemäß einer Weiterbildung der Erfindung ist vorgesehen, dass die Umfangsschneide durchgängig aus einem Material gebildet ist, das von einem Material verschieden ist, aus dem ein Grundkörper des Bearbeitungsabschnitts gebildet ist. Die Umfangsschneide ist also bevorzugt aus einem ersten Material gebildet, welches verschieden ist von einem zweiten Material, aus dem der Grundkörper des Bearbeitungsabschnitts gebildet ist. Besonders bevorzugt weist die Umfangsschneide polykristallinen Diamant (PKD) auf oder besteht aus PKD.

Alternativ oder zusätzlich weist der Grundkörper des Bearbeitungsabschnitts bevorzugt Hartmetall auf oder besteht aus Hartmetall.

Ist die Umfangsschneide aus PKD gebildet, kann sie besonders scharf und zugleich verschleißfest sein. Ist der Grundkörper aus Hartmetall gebildet, weist dieser hervorragende Eigenschaften zur Bearbeitung von Werkstücken auf und ist zugleich kostengünstig herstellbar.

Vorzugsweise ist die Umfangsschneide einstückig mit dem Grundkörper ausgebildet. Alternativ ist es möglich, dass die Umfangsschneide an dem Grundkörper befestigt oder in den Grundkörper eingesetzt ist.

Gemäß einer Weiterbildung der Erfindung ist vorgesehen, dass die Umfangsschneide aus einem Rohling des Bearbeitungsabschnitts herausgearbeitet ist, wobei der Rohling das Material des Grundkörpers und das Material der Umfangsschneide einstückig aufweist, wobei das Material der Umfangsschneide in oder an dem Material des Grundkörpers in dem Rohling entlang eines vorbestimmten Umfangsschneidenverlaufs angeordnet ist. Auf diese Weise kann eine durchgehende, fugenlose und zugleich präzise einem gewünschten Verlauf folgende Umfangsschneide bereitgestellt werden.

Besonders bevorzugt ist die Umfangsschneide im Wege der sogenannte Vein-Technologie hergestellt. Dabei wird in einen Schlitz, der in einem Vorrohling ausgebildet ist und dem späteren Verlauf der Umfangsschneide folgt, polykristalliner Diamant eingebracht, und der polykristalline Diamant wird gemeinsam mit dem Vorrohling unter hohem Druck, insbesondere von ungefähr 60000 bar, sowie hoher Temperatur, insbesondere von ungefähr 1500 °C, gesintert, wodurch der Rohling gebildet wird. Dabei bildet sich eine feste PKD-Ader in dem Rohling aus. Diese PKD-Ader verläuft entlang des Schlitzes und damit entlang der für die Umfangsschneide vorgesehenen Linie. Die Umfangsschneide wird dann schließlich aus dieser PKD-Ader an dem Rohling herausgearbeitet. Insbesondere ist es möglich, dass die Umfangsschneide aus der PKD-Ader durch Erodieren herausgearbeitet wird. Auf diese Weise wird der Bearbeitungsabschnitt gebildet.

Gemäß einer Weiterbildung der Erfindung ist vorgesehen, dass das Fräswerkzeug wenigstens einen Kühl-/Schmiermittel-Kanal aufweist. Auf diese Weise kann einer Bearbeitungsstelle, wo das Fräswerkzeug in Eingriff mit einem zu bearbeitenden Werkstück ist, Kühl-/Schmiermittel zugeführt werden. Der wenigstens eine Kühl-/Schmiermittel-Kanal mündet bevorzugt auf der wenigstens einen Spanfläche in den Spanraum. Alternativ oder zusätzlich ist es auch möglich, dass der Kühl-/Schmiermittel-Kanal in die Stirnseite des Fräswerkzeugs und/oder auf einer Umfangsfläche des Bearbeitungsabschnitts mündet.

Vorzugsweise ist ein Medienaustritt des Kühl-/Schmiermittel-Kanals - insbesondere in den Spanraum - so ausgerichtet, dass in dem Spanraum eine Spülwirkung zur Unterstützung des Spänetransports entsteht. Der Medienaustritt kann von dem Durchbruch aus gesehen insbesondere auf der dem Schaft abgewandten und der Stirnseite zugewandten Seite angeordnet und in Richtung auf den Schaft ausgerichtet sein. Es kann so ein Spülen der Späne zum Schaft hin bewirkt werden. Insbesondere ist es möglich, dass der Medienaustritt auf die Mündung des Durchbruchs hin ausgerichtet ist. Auf diese Weise kann bewirkt werden, dass Späne effizient in den Durchbruch gespült werden. Der Medienaustritt kann aber auch von dem Durchbruch aus gesehen schaftseitig angeordnet sein und auf die Stirnseite ausgerichtet sein. In diesem Fall ergibt sich ein Spülen der Späne vom Schaft weg.

Der wenigstens eine Kühl-/Schmiermittel-Kanal verläuft bevorzugt zumindest bereichsweise innerhalb des wenigstens einen Stegs.

Gemäß einer Weiterbildung der Erfindung ist schließlich vorgesehen, dass das Fräswerkzeug als Schaftfräser ausgebildet ist. Dabei verwirklichen sich in besonderer Weise die bereits genannten Vorteile.

Das Fräswerkzeug weist somit einen der Stirnseite des Bearbeitungsabschnitts abgewandten Schaft auf, der insbesondere zum Einspannen des Fräswerkzeugs in eine Maschine, insbesondere in eine Spindel, einen Adapter oder dergleichen, dient.

Vorzugsweise ist das Fräswerkzeug zweistückig hergestellt, wobei der Bearbeitungsabschnitt einerseits und der Schaft andererseits getrennt gefertigt und schließlich miteinander - vorzugsweise durch Schweißen, Löten, Hartlöten, oder auf andere geeignete Weise, miteinander verbunden werden. Dies kann vor oder nach dem Ausbilden der Schneidkantengeometrie der Umfangsschneide erfolgen. Es ist möglich, dass sich der der Umfangsschneide zugeordnete Spanraum und somit auch die der Umfangsschneide zugeordnete Spanfläche in den Bereich des Schafts hinein fortsetzt.

Eine zweiteilige Fertigung des Fräswerkzeugs ermöglicht zum einen eine besonders effiziente Herstellung des Bearbeitungsabschnitts - insbesondere im Rahmen der Vein-Technologie -, zum anderen aber auch eine verschiedene Materialwahl für den Bearbeitungsabschnitt einerseits und den Schaft andererseits. Grundsätzlich ist es möglich, dass auch der Schaft - insbesondere wie auch der Grundkörper des Bearbeitungsabschnitts - aus Hartmetall gebildet ist, es ist aber auch möglich, den Schaft aus einem anderen Material, insbesondere aus Stahl, zu bilden.

Die Erfindung wird im Folgenden anhand der Zeichnung näher erläutert. Dabei zeigen:
- Figur 1: eine schematische Darstellung der Bearbeitung eines Werkstücks mit einem Fräswerkzeug;
- Figur 2: eine dreidimensionale Ansicht eines Ausführungsbeispiels eines Fräswerkzeugs, und
- Figur 3: eine Seitenansicht des Fräswerkzeugs gemäß Figur 2.

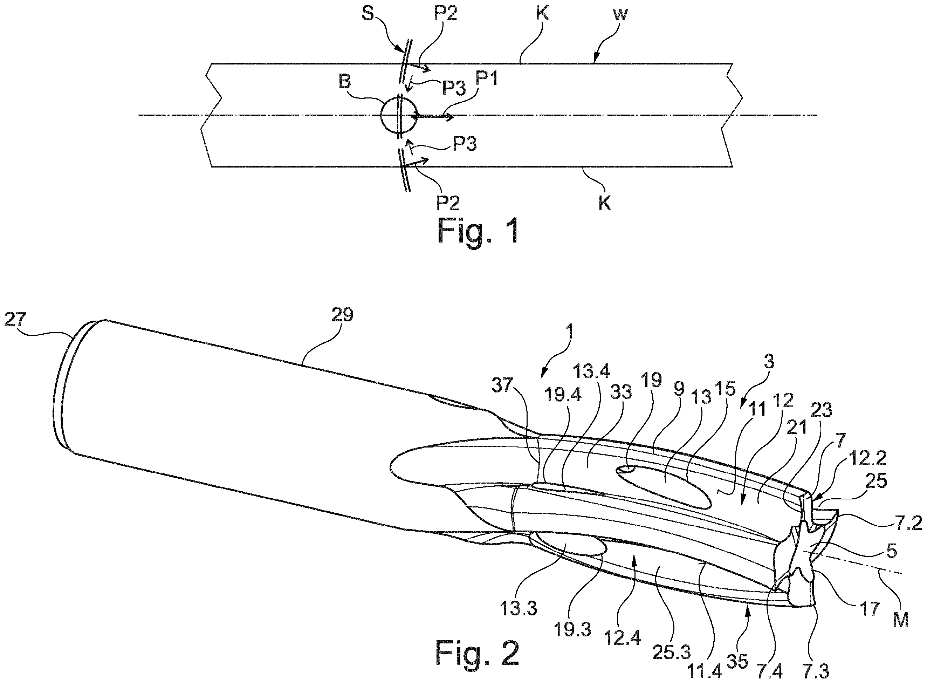

**Fig. 1** zeigt eine schematische Darstellung der Bearbeitung eines hier plattenförmigen Werkstücks W mittels eines Fräswerkzeugs, von dem hier nur eine Schneide S angedeutet ist. Die in Figur 1 dargestellte Relativverlagerung zwischen dem Fräswerkzeug und dem Werkstück W ergibt sich insbesondere beim Formatieren, das heißt In-Form-Schneiden, von Platten, wobei die hier beschriebenen Phänomene insbesondere beim Formatieren von faserverstärkten, plattenförmigen Werkstücken W auftreten.

Die Schneide S bewegt sich während der Bearbeitung des Werkstücks W relativ zu diesem entlang einer durch einen ersten Pfeil P1 dargestellten Richtung. Die Schneide S weist eine gekrümmte Form auf, um durch zwei zweite Pfeile P2 angedeutete Prozesskräfte in Richtung eines Werkstückinneren des Werkstücks W zu leiten und so zu verhindern, dass geschnittene Fasern des Werkstücks W über Kanten K desselben hinausstehen. Mittels der gekrümmten Geometrie der Schneide S kann auch eine Gratbildung im Bereich der Kanten K vermieden werden.

Aufgrund der nach innen gerichteten Prozesskräfte fließen durch die Schneide S von dem Werkstück W abgetragene Späne entlang von dritten Pfeil P3 in Richtung eines Tiefpunkts oder Minimums der Schneide S, wo sie sich sammeln. Hierdurch ergibt sich in einem durch einen Kreis angedeuteten Bereich B eine Spänekompression und somit insbesondere bei erhöhter Zerspanleistung eine erhöhte Wärmeentwicklung, die auch zu einer Strukturaufweichung des Werkstücks W führen kann. Die in dem Bereich B gesammelten Späne können nur schlecht abgeführt werden.

**Fig. 2** zeigt eine dreidimensionale Darstellung eines Ausführungsbeispiels eines Fräswerkzeugs 1. Dieses weist eine Mittelachse M sowie einen Bearbeitungsabschnitt 3 auf. Der Bearbeitungsabschnitt 3 weist wenigstens einen sich ausgehend von einem Zentrum 5 radial nach außen erstreckenden Steg 7 auf, an dem umfangsseitig eine Umfangsschneide 9 und eine der Umfangsschneide 9 zugeordnete Spanfläche 11 angeordnet sind. Die Umfangsschneide 9 und die Spanfläche 11 erstrecken sich dabei in Richtung der Mittelachse M, wobei sie - wiederum in Richtung der Mittelachse M gesehen - eine endliche Krümmung aufweisen, sodass die Spanfläche 11 konkav ausgebildet ist. Dabei ist vorgesehen, dass der wenigstens eine Steg 7 einen in einen von der Spanfläche 11 begrenzten Spanraum 12 mündenden, den Steg 7 durchsetzenden Durchbruch 13 aufweist. Auf diese Weise können auf der gekrümmten Spanfläche 11 gesammelte Späne über den Durchbruch 13 abgeführt werden, sodass eine Spänekompression vermieden wird. Somit werden auch die mit der Spänekompression verbundenen Nachteile vermieden.

Die Mittelachse M ist insbesondere eine Längsachse des Bearbeitungsabschnitts 3, insbesondere eine Längsachse des Fräswerkzeugs 1.

Die Umfangsschneide 9 ist insbesondere als geometrisch definierte Schneide ausgebildet.

Eine Mündung 15 des Durchbruchs 13 ist auf der Spanfläche 11 insbesondere im Bereich eines Minimums, insbesondere entlang eines entlang der Mittelachse und in radialer Richtung gesehenen Tiefpunkts, der gekrümmten Spanfläche 11 angeordnet. Dieser Bereich entspricht dem in Figur 1 dargestellten Bereich B, in dem ein Druckpunkt durch Spänekompression gebildet wird, wenn der Durchbruch 13 nicht vorhanden ist. Aufgrund des Durchbruchs 13 ist dieser Druckpunkt in vorteilhafter Weise entlastet, da die dort gesammelten Späne in den Durchbruch 13 ausweichen können.

Der Durchbruch 13 durchsetzt den Steg 7 hier schräg zur Mittelachse M, wobei er ihn insbesondere mit einem spitzen Winkel zur Mittelachse M derart durchsetzt, dass die Mündung 15 näher an einer Stirnseite 17 des Bearbeitungsabschnitts 3 angeordnet ist als ein der Mündung 15 abgewandtes Ende 19 des Durchbruchs 13. Bevorzugt ist dabei ein Verlauf eines stirnseitigen Spanflächenabschnitts 21 der Spanfläche 11 in ein Inneres des Stegs 7 fortgesetzt, sodass sich ein besonders guter Spanablauf und eine effiziente Spanförderung ergibt. Der Steg 7 weist an der Stirnseite 5 bevorzugt eine Stirnschneide 23 auf.

Die Mündung 15 ist bevorzugt gerundet ausgebildet, weist also insbesondere eine abgerundete, hier im Wesentlichen ovale Umfangslinie auf der Spanfläche 11 auf.

Besonders bevorzugt ist der Durchbruch 13 zumindest im Inneren des Stegs 7 kreiszylindrisch ausgebildet. In Zusammenhang mit dem spitzen Winkel, den er vorzugsweise mit der Mittelachse M einschließt, ergibt sich so eine von der Kreisform abweichende, insbesondere ovale Geometrie der Mündung 15 auf der Spanfläche 11.

Der Durchbruch 13 mündet mit dem der Mündung 15 abgewandten Ende bevorzugt in einen Rückraum 25 des Stegs 7 ein, wobei der Rückraum 25 - in Umfangsrichtung und in bestimmungsgemäßer Rotationsrichtung des Werkzeugs 1 gesehen - dem Steg 7 nacheilt, mithin hinter dem Steg 7 angeordnet ist.

Alternativ ist es auch möglich, dass mit dem Durchbruch 13 eine vollständige "Untergrund"-Spanabfuhr zur Entsorgung der Späne bis zu einem Schaftende 27 oder zumindest bis zum Bereich eines Schafts 29 des Fräswerkzeugs 1 geschaffen wird, indem sich der Durchbruch 13 im Inneren des Fräswerkzeugs 1 bis zu dem Schaftende 27 oder zumindest bis in den Schaft 29 fortsetzt und erst im Bereich des Schaftendes 27 oder zumindest im Bereich des Schafts 29 in eine äußere Umgebung des Fräswerkzeugs 1 mündet.

Des Fräswerkzeug 1 weist hier eine Mehrzahl von Stegen 7 auf, insbesondere konkret vier Stege, nämlich den ersten Steg 7, einen zweiten Steg 7.2, einen dritten Steg 7.3 und einen vierten Steg 7.4. Die Stege 7, 7.2, 7.3, 7.4 sind hier identisch ausgebildet.

In Figur 2 ist insbesondere ein dritter Rückraum 25.3 des dritten Stegs 7.3 dargestellt, in den das der entsprechenden Mündung abgewandte Ende 19.3 des dem dritten Steg 7.3 zugeordneten Durchbruchs 13.3 mündet. Dabei wird deutlich, dass der dritte Rückraum 25.3 zugleich der Spanraum 12.4 des vierten Stegs 7.4 ist, der hier insbesondere durch eine vierte Spanfläche 11.4 des vierten Stegs 7.4 begrenzt wird.

Insgesamt mündet bei dem hier dargestellten Ausführungsbeispiel jeder Durchbruch 13 mit seinem der Mündung 15 abgewandten Ende 19 in den jeweiligen Spanraum 12 desjenigen Stegs 7, der dem von dem Durchbruch 13 durchsetzten Steg 7 nacheilt. Aufgrund der schrägen Ausrichtung der Durchbrüche 13 relativ zu der Mittelachse M sind dabei die Enden 19 jeweils unterhalb der zugeordneten Mündungen 15 angeordnet, sodass die von den voreilenden Stegen 7 in die Spanräume 12 gelangenden Späne auf einem schaftseitigen Spanflächenabschnitt 33 ablaufen.

In Figur 2 ist auch das vierte Ende 19.4 des dem vierten Steg 7.4 zugeordneten Durchbruchs 13.4 dargestellt, durch welches Späne in den Spanraum 12 und insbesondere auf die Spanfläche 11 des ersten Stegs 7 gelangen, der zugleich der Rückraum des vierten Stegs 7.4 ist.

Die Durchbrüche 13 sind bevorzugt in einen Grundkörper 35 des Bearbeitungsabschnitts 3 erodiert.

Die Umfangsschneiden 9 sind vorzugsweise durchgängig aus einem Material gebildet, welches von einem Material des Grundkörpers 35 verschieden ist, besonders bevorzugt aus PKD. Der Grundkörper 35 ist bevorzugt aus Hartmetall gebildet. Es ist möglich, dass die Umfangsschneiden 9 einstückig mit dem Grundkörper 35 ausgebildet sind. Alternativ ist es auch möglich, dass das Material der Umfangsschneiden 9 in den Grundkörper 35 eingesetzt ist.

Besonders bevorzugt sind die Umfangsschneiden 9 aus einem Rohling herausgearbeitet, der das Material des Grundkörpers 35 und das Material der Umfangsschneiden 9 einstückig aufweist, wobei das Material der Umfangsschneiden 9 in oder an dem Material des Grundkörpers 35 in dem Rohling entlang eines vorbestimmten Umfangsschneidenverlaufs der Umfangsschneiden 9 angeordnet ist. Besonders bevorzugt sind die Umfangsschneiden 9 mittels der sogenannten Vein-Technologie gebildet. Auf diese Weise werden an dem Rohling PKD-Adern bereitgestellt, die dann bearbeitet, insbesondere scharfgeschliffen oder in ihre endgültige Form erodiert werden können.

Das Fräswerkzeug 1 ist bevorzugt als Schaftfräser ausgebildet und weist - entlang der Mittelachse M gesehen - der Stirnseite 17 abgewandt den Schaft 29 auf, der insbesondere zum Einspannen des Fräswerkzeugs 1 in eine Spindel oder dergleichen dient. Es ist möglich, dass der Schaft 29 einerseits und der Bearbeitungsabschnitt 3 andererseits getrennt voneinander hergestellt und anschließend, hier insbesondere entlang einer Fuge 37, miteinander verbunden werden, vorzugsweise durch Löten, Hartlöten, Schweißen, oder in anderer geeigneter Weise. Selbstverständlich ist es aber auch möglich, den Schaft 29 und den Bearbeitungsabschnitt 3 einstückig miteinander auszubilden.

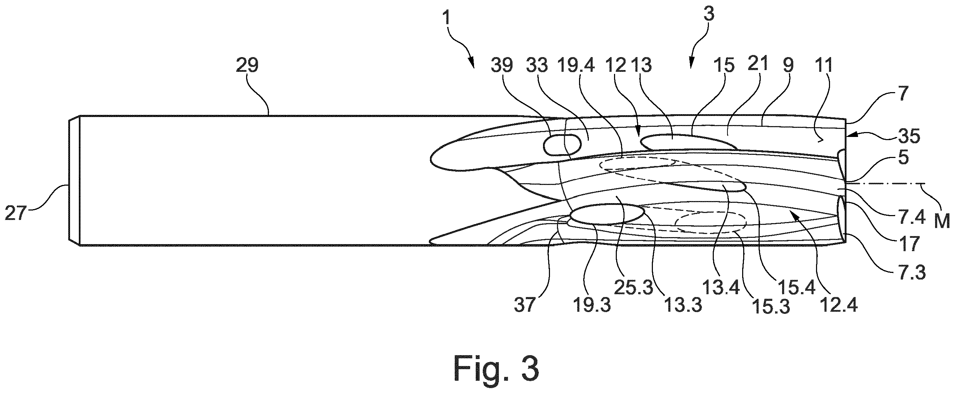

**Fig. 3** zeigt eine seitliche Ansicht des Ausführungsbeispiels des Fräswerkzeugs 1 gemäß Figur 2. Gleiche und funktionsgleiche Elemente sind mit gleichen Bezugszeichen versehen, sodass insofern auf die vorangegangene Beschreibung verwiesen wird. Dabei sind hier gestrichelt insbesondere die Verläufe des dritten Durchbruchs 13.3 in dem dritten Steg 7.3 und des vierten Durchbruchs 13.4 in dem vierten Steg 7.4 dargestellt.

Das Fräswerkzeug 1 weist bevorzugt wenigstens einen Kühl-/Schmiermittel-Kanal 39 auf, der hier auf der Spanfläche 11 und insbesondere in dem schaftseitigen Spanflächenbereich 33 in den Spanraum 12 einmündet. Vorzugsweise ist jedem der Stege 7, 7.2, 7.3, 7.4 ein solcher Kühl-/Schmiermittel-Kanal zugeordnet.

Wenigstens ein Kühl-/Schmiermittel-Kanal kann alternativ oder zusätzlich auch in die Stirnseite 17 oder in einen anderen Bereich der Stege 7, 7.2, 7.3, 7.4 münden. Ein Medienaustritt des Kühl-/Schmiermittel-Kanals 39 kann auch in bestimmter Weise ausgerichtet sein. Beispielsweise kann ein schaftseitiger Medienaustritt zur Stirnseite 17 hin ausgerichtet sein. Ein stirnseitig angeordneter Medienaustritt kann auf den Schaft 29 hin ausgerichtet sein. Besonders bevorzugt ist der Medienaustritt auf den Durchbruch 13 hin ausgerichtet, so dass sich eine Spülwirkung in den Durchbruch 13 hinein ergibt.

Mit dem Fräswerkzeug 1 wird die Möglichkeit geschaffen, insbesondere faserverstärkte Werkstücke ohne Gefahr einer Delamination insbesondere im Bereich von Kanten K selbst mit hoher Zerspanleistung ohne die Gefahr einer Spänekompression und Strukturaufweichung zu bearbeiten.

## Patentansprüche

1. Fräswerkzeug (1), mit
- einem eine Mittelachse (M) aufweisenden Bearbeitungsabschnitt (3), wobei
- der Bearbeitungsabschnitt (3) wenigstens einen sich ausgehend von einem Zentrum (5) des Bearbeitungsabschnitts (3) radial nach außen erstreckenden Steg (7) aufweist, an dem eine Umfangsschneide (9) und eine der Umfangsschneide (9) zugeordnete Spanfläche (11) angeordnet sind, die sich in Richtung der Mittelachse (M) erstrecken, wobei
- die Umfangsschneide (9) und die ihr zugeordnete Spanfläche (11) - in Richtung der Mittelachse (M) gesehen - eine endliche Krümmung aufweisen, sodass die Spanfläche (11) konkav ausgebildet ist, wobei
- der wenigstens eine Steg (7) einen in einen von der Spanfläche (11) begrenzten Spanraum (12) mündenden, den Steg (7) durchsetzenden Durchbruch (13) aufweist,
**dadurch gekennzeichnet, dass**
- der Durchbruch (13) eine in der Spanfläche (11) angeordnete Mündung (15) aufweist, wobei
- über die Mündung (15) des Durchbruchs (13) in der Spanfläche (11) auf der Spanfläche (11) angeordnete Späne während der Bearbeitung eines Werkstücks in den Durchbruch (13) und damit in den Steg (7) eintreten können, sodass eine Spänesammlung auf der Spanfläche (11) vermieden wird.

2. Fräswerkzeug (1) nach Anspruch 1, **dadurch gekennzeichnet, dass** der Durchbruch (13) im Bereich eines Minimums der gekrümmten Spanfläche (11) in den Spanraum (12) mündet.

3. Fräswerkzeug (1) nach einem der vorhergehenden Ansprüche, **dadurch gekennzeichnet, dass** der Durchbruch (13) den Steg (7) schräg zu der Mittelachse (M), vorzugsweise mit einem spitzen Winkel zu der Mittelachse (M), durchsetzt, wobei die Mündung (15) des Durchbruchs (13) auf der Spanfläche (11) näher an einer Stirnseite (17) des Bearbeitungsabschnitts (3) angeordnet ist als ein der Mündung (15) abgewandtes Ende (19) des Durchbruchs (13).

4. Fräswerkzeug (1) nach einem der vorhergehenden Ansprüche, **dadurch gekennzeichnet, dass** der Durchbruch (13) zumindest im Inneren des Stegs (7) kreiszylindrisch ausgebildet ist.

5. Fräswerkzeug (1) nach einem der vorhergehenden Ansprüche, **dadurch gekennzeichnet, dass** der Durchbruch (13) mit einem der Mündung (15) in den Spanraum (12) abgewandten Ende (19) in einen Rückraum (25) des Stegs (7) einmündet, wobei der Rückraum (25) - in Umfangsrichtung und in einer bestimmungsgemäßen Rotationsrichtung des Fräswerkzeugs (1) gesehen - dem Steg (7) nacheilt.

6. Fräswerkzeug (1) nach einem der vorhergehenden Ansprüche, **dadurch gekennzeichnet, dass** das Fräswerkzeug (1) wenigstens einen weiteren Steg (7.2) mit einer Umfangsschneide (9) und einer Spanfläche (11) aufweist, wobei der Rückraum (25) des Stegs (7) ein Spanraum (12.2) des weiteren Stegs (7.2) ist.

7. Fräswerkzeug (1) nach einem der vorhergehenden Ansprüche, **dadurch gekennzeichnet, dass** die Umfangsschneide (9) durchgängig aus einem von einem Material eines Grundkörpers (35) des Bearbeitungsabschnitts (3) verschiedenen Material, vorzugsweise aus polykristallinem Diamant, gebildet ist.

8. Fräswerkzeug (1) nach einem der vorhergehenden Ansprüche, **dadurch gekennzeichnet, dass** die Umfangsschneide (9) aus einem Rohling herausgearbeitet ist, der das Material des Grundkörpers (35) und das Material der Umfangsschneide (9) einstückig aufweist, wobei das Material der Umfangsschneide (9) in oder an dem Material des Grundkörpers (35) in dem Rohling entlang eines vorbestimmten Umfangsschneidenverlaufs angeordnet ist.

9. Fräswerkzeug (1) nach einem der vorhergehenden Ansprüche, **dadurch gekennzeichnet, dass** das Fräswerkzeug (1) wenigstens einen Kühl-/Schmiermittel-Kanal (39) aufweist, der bevorzugt auf der wenigstens einen Spanfläche (11) in den Spanraum (12) mündet.

10. Fräswerkzeug (1) nach einem der vorhergehenden Ansprüche, **dadurch gekennzeichnet, dass** das Fräswerkzeug (1) als Schaftfräser ausgebildet ist.

## Claims

1. Milling tool (1), with
- a machining section (3) comprising a central axis (M), wherein
- the machining section (3) comprises at least one web (7) extending radially outwards from a centre (5) of the machining section (3), on which a circumferential cutting edge (9) and a chip surface (11) associated with the circumferential cutting edge (9) are arranged, which extend in the direction of the central axis (M), wherein
- the circumferential cutting edge (9) and the chip surface (11) associated therewith - viewed in the direction of the central axis (M) - comprise a finite curvature, so that the chip surface (11) is configured concave, wherein
- the at least one web (7) comprises a breach (13) opening into a chip space (12) delimited by the chip surface (11) and passing through the web (7),
**characterised in that**
- the breach (13) comprises an aperture (15) arranged in the chip surface (11), wherein
- chips arranged on the chip surface (11) can enter the breach (13) during machining of a workpiece and thus the web (7) via the aperture (15) of the breach (13), so that chip collection on the chip surface (11) is avoided.

2. Milling tool (1) according to claim 1, **characterised in that** the breach (13) opens into the chip space (12) in the region of a minimum of the curved chip surface (11).

3. Milling tool (1) according to one of the preceding claims, **characterised in that** the breach (13) passes through the web (7) obliquely to the central axis (M), preferably at an acute angle to the central axis (M), wherein the aperture (15) of the breach (13) on the chip surface (11) is arranged closer to an end face (17) of the machining section (3) than an end (19) of the breach (13) facing away from the aperture (15).

4. Milling tool (1) according to one of the preceding claims, **characterised in that** the breach (13) is configured circular-cylindrical at least inside the web (7).

5. Milling tool (1) according to one of the preceding claims, **characterised in that** the breach (13) opens with an end (19) facing away from the aperture (15) into the chip space (12) into a rear space (25) of the web (7), wherein the rear space (25) - viewed in circumferential direction and in an intended rotational direction of the milling tool (1) - follows the web (7).

6. Milling tool (1) according to one of the preceding claims, **characterised in that** the milling tool (1) comprises at least one further web (7.2) with a circumferential cutting edge (9) and a chip surface (11), wherein the rear space (25) of the web (7) is a chip space (12.2) of the further web (7.2).

7. Milling tool (1) according to one of the preceding claims, **characterised in that** the circumferential cutting edge (9) is continuously formed of a material different from a material of a base body (35) of the machining section (3), preferably of polycrystalline diamond.

8. Milling tool (1) according to one of the preceding claims, **characterised in that** the circumferential cutting edge (9) is machined out of a blank comprising the material of the base body (35) and the material of the circumferential cutting edge (9) integrally, wherein the material of the circumferential cutting edge (9) is arranged in or on the material of the base body (35) in the blank along a predetermined circumferential cutting-edge course.

9. Milling tool (1) according to one of the preceding claims, **characterised in that** the milling tool (1) comprises at least one coolant/lubricant channel (39) which preferably opens into the chip space (12) on the at least one chip surface (11).

10. Milling tool (1) according to one of the preceding claims, **characterised in that** the milling tool (1) is configured as an end milling cutter.

## Revendications

1. Outil de fraisage (1), avec
- une section d'usinage (3) présentant un axe central (M), dans laquelle
- la section d'usinage (3) présente au moins une traverse (7) s'étendant depuis celle-ci radialement vers l'extérieur à partir d'un centre (5) de la section d'usinage (3), sur laquelle sont disposées une arête de coupe périphérique (9) et une face de coupe (11) associée à l'arête de coupe périphérique (9), qui s'étendent en direction de l'axe central (M), dans lequel
- l'arête de coupe périphérique (9) et la face de coupe (11) qui lui est associée présentent - vu dans la direction de l'axe central (M) - une courbure finie, de sorte que la face de coupe (11) est concave, dans lequel
- la au moins une traverse (7) présente une percée (13) débouchant dans un logement de copeaux (12) délimité par la face de coupe (11) et traversant la traverse (7),
**caractérisé en ce que**
- la percée (13) présente une embouchure (15) disposée dans la face de coupe (11), dans lequel
- des copeaux disposés sur la face de coupe (11) par l'intermédiaire de l'embouchure (15) de la percée (13) dans la face de coupe (11) peuvent pénétrer dans la percée (13) et donc dans la traverse (7) pendant l'usinage d'une pièce, de sorte qu'une accumulation de copeaux sur la face de coupe (11) est évitée.

2. Outil de fraisage (1) selon la revendication 1, **caractérisé en ce que** la percée (13) débouche dans le logement de copeaux (12) dans la zone d'un minimum de la face de coupe (11) incurvée.

3. Outil de fraisage (1) selon l'une des revendications précédentes, **caractérisé en ce que** la percée (13) traverse la traverse (7) en oblique par rapport à l'axe central (M), de préférence sous un angle aigu par rapport à l'axe central (M), l'embouchure (15) de la percée (13) étant disposée sur la face de coupe (11) plus près d'une face frontale (17) de la section d'usinage (3) qu'une extrémité (19) de la percée (13) opposée à l'embouchure (15).

4. Outil de fraisage (1) selon l'une des revendications précédentes, **caractérisé en ce que** la percée (13) est de forme cylindrique circulaire au moins à l'intérieur de la traverse (7).

5. Outil de fraisage (1) selon l'une des revendications précédentes, **caractérisé en ce que** la percée (13) débouche par une extrémité (19) opposée à l'embouchure (15) dans le logement de copeaux (12) dans un espace arrière (25) de la traverse (7), dans lequel l'espace arrière (25) - vu dans le sens périphérique et dans un sens de rotation en fonction de la destination de l'outil de fraisage (1) - suit la traverse (7).

6. Outil de fraisage (1) selon l'une des revendications précédentes, **caractérisé en ce que** l'outil de fraisage (1) présente au moins une autre traverse (7.2) avec une arête de coupe périphérique (9) et une face de coupe (11), l'espace arrière (25) de la traverse (7) étant un logement de copeaux (12.2) de l'autre traverse (7.2).

7. Outil de fraisage (1) selon l'une des revendications précédentes, **caractérisé en ce que** l'arête de coupe périphérique (9) est formée de manière continue d'un matériau différent d'un matériau d'un corps de base (35) de la section d'usinage (3), de préférence de diamant polycristallin.

8. Outil de fraisage (1) selon l'une des revendications précédentes, **caractérisé en ce que** l'arête de coupe périphérique (9) est façonnée à partir d'une pièce brute comprenant d'un seul tenant le matériau du corps de base (35) et le matériau de l'arête de coupe périphérique (9), le matériau de l'arête de coupe périphérique (9) étant disposé dans ou sur le matériau du corps de base (35) sur la pièce brute le long d'un tracé d'arête de coupe périphérique prédéterminé.

9. Outil de fraisage (1) selon l'une des revendications précédentes, **caractérisé en ce que** l'outil de fraisage (1) présente au moins un canal de refroidissement/lubrification (39) qui débouche de préférence sur la au moins une face de coupe (11) dans le logement de copeaux (12).

10. Outil de fraisage (1) selon l'une des revendications précédentes, **caractérisé en ce que** l'outil de fraisage (1) est conçu comme une fraise à queue.
